**Europäisches Patentamt**

**European Patent Office**

**Office européen des brevets**

(19)

(11) Veröffentlichungsnummer : **0 438 095 B1**

## (12) EUROPÄISCHE PATENTSCHRIFT

(45) Veröffentlichungstag der Patentschrift :
**18.11.93 Patentblatt 93/46**

(51) Int. Cl.$^5$ : **G01B 21/04**

(21) Anmeldenummer : **91100347.3**

(22) Anmeldetag : **12.01.91**

(54) **Korrekturverfahren für Koordinatenmessgeräte.**

(30) Priorität : **19.01.90 DE 4001433**

(43) Veröffentlichungstag der Anmeldung :
**24.07.91 Patentblatt 91/30**

(45) Bekanntmachung des Hinweises auf die
Patenterteilung :
**18.11.93 Patentblatt 93/46**

(84) Benannte Vertragsstaaten :
**DE FR GB SE**

(56) Entgegenhaltungen :
**DE-A- 2 938 226**
**DE-A- 3 011 003**
**DE-A- 3 740 070**

(73) Patentinhaber : **Firma Carl Zeiss**
**D-73446 Oberkochen (DE)**
(84) **DE FR SE**
Patentinhaber : **CARL ZEISS-STIFTUNG**
**HANDELND ALS CARL ZEISS**
**D-7920 Heidenheim (Brenz) (DE)**
(84) **GB**

(72) Erfinder : **Debitsch, Rasmus**
**Kopernikusstrasse 1**
**W-7082 Oberkochen (DE)**
Erfinder : **Enderle, Eckhard**
**Hutsteinweg 6**
**W-7080 Aalen-Dewangen (DE)**
Erfinder : **Müller, Helmut**
**Am Holzbrunnen 11a**
**W-7070 Schwäbisch Gmünd, Grossdeinbach**
**(DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Bestimmung der Ist-Position eines über ein Dreh-Schwenk-Gelenk an einen Koordinatenmeßgerät befestigten Tastkopfes.

Dreh-Schwenk-Gelenke dienen an Koordinatenmeßgeräten in erster Linie dazu, den für die Koordinatenvermessung von Werkstücken benutzten Tastkopf winkelmäßig so auszurichten, daß er für die gewünschte Meßaufgabe optimal eingesetzt werden kann, beispielsweise um in eine Vielzahl von Bohrungen mit unterschiedlicher Orientierung am Werkstück einzutauchen.

Die bekannten Dreh-Schwenk-Gelenke lassen sich in zwei Klassen einteilen: Die erste Klasse bilden sogenannte schaltende Dreh-Schwenk-Gelenke, bei denen der eingesetzte Tastkopf über Rasten in eine begrenzte Anzahl von z.B. je um ca. 7,5° voneinander verschiedene Winkelstellungen eingestellt werden kann. Die andere Klasse bilden sogenannte messende Dreh-Schwenk-Gelenke, die sich kontinuierlich auf beliebige Dreh- bzw. Schwenkwinkel einstellen lassen und Encoder in beiden Achsen enthalten, die den eingestellten Winkelwerten entsprechende Meßwerte an den Rechner des Koordinatenmeßgerätes liefern.

Ein schaltendes Dreh-Schwenk-Gelenk ist beispielsweise in der US-PS 43 13 263 und ein messendes Dreh-Schwenk-Gelenk in der DE-OS 37 40 070 beschrieben.

Die Lage der direkt oder über Verlängerungsstücke an eine solche Dreh-Schwenk-Gelenk angesetzten Tastköpfe bzw. die Lage der Tastkugel des Tastkopfes muß in allen Winkelstellungen sehr genau bekannt sein, wenn hochpräzise Koordinatenmessungen durchgeführt werden sollen. Die genannten Teile biegen sich nun allerdings im Bereich von mehreren 10 µm aufgrund ihres eigenen Gewichtes durch. solange sich die winkelmäßige Lage des Tasters und der Tasterverlängerung nicht verändert, ist der Betrag der Durchbiegung konstant und wirkt sich deshalb auf die Koordinatenmessung am Werkstück, die ja stets eine Relativmessung ist, nicht aus. Diese Voraussetzung ist jedoch während des Betriebs eines Tastkopfes an einem Dreh-Schwenk-Gelenk nicht gegeben. Denn wenn der Taster mit Hilfe des Dreh-Schwenk-Gelenks in unterschiedliche Winkelstellungen gebracht wird, dann ändert sich der Betrag der Durchbiegung abhängig davon, ob der Tastkopf beispielsweise waagerecht oder vertikal ausgerichtet ist. Im letzteren Falle ist die Durchbiegung praktisch Null. Im ersteren Falle hingegen kann sie Werte in der Größenordnung von bis zu 180 µm annehmen.

Bisher wurden insbesondere schaltende Dreh-Schwenk-Gelenke vor der Messung mit einem neu eingesetzten Tastkopf einem Kalibrierverfahren unterzogen, in dem die aktuelle Tasterkoordinate, d.h. die Lage der Tastkugel des Tastkopfes für alle im Rahmen des Meßvorganges benötigten Winkelstellungen bestimmt und gespeichert wurde. Hierbei wurde auch der Einfluß der Schwerkraft auf die Tasterlage, d.h. der Effekt der Durchbiegung aufgrund des Eigengewichtes des Tastkopfes bzw. seiner Verlängerung, automatisch miterfaßt. Ein derartiges Kalibrierverfahren ist jedoch sehr zeitaufwendig und umständlich, da die Lage des Tastkopfes in jeder Winkelstellung des Dreh-Schwenk-Gelenks durch mehrmaliges Antasten einer Kalibrierkugel und anschließende Kugeleinpassung neu bestimmt werden muß.

Aus der US-PS 46 63 852 ist es bekannt, Abweichungen der Lage des Meßarms eines Koordinatenmeßgerätes von einer Geraden, d.h. Verbiegungen des Meßarms, mit Hilfe von angesetzten Neigungsmessern zu erfassen und die Ist-Lage des Tastkopfes bzw. der Tastkugel mit den von den Neigungsmessern gewonnenen Meßwerten zu korrigieren. Dies Verfahren ist jedoch nicht anwendbar, wenn die winkelmäßige Orientierung des betreffenden Teils z.B. durch ein Dreh-Schwenk-Gelenk gezielt veränderbar sein soll. Zum anderen ist es auch nicht ohne weiteres möglich, in einen Tastkopf Sensoren zur Messung der Neigung einzubauen.

Aus der EP-PS 0 147 529 ist es bekannt, Biegungen des Taststifts eines Tastkopfes, die während des Antastvorganges auftreten, zu korrigieren, indem für die Geschwindigkeit des Antastvorganges charakteristische Korrekturwerte sowie Korrekturwerte, die die Materialpaarung beschreiben, bei der Gewinnung des Meßergebnisses mitberücksichtigt werden. Auch dies bekannte Verfahren ist nicht dazu geeignet, Positionsabweichungen der Tastkugel aufgrund unterschiedlich starker Durchbiegung je nach eingestellter Winkelstellung des Tastkopfes zu korrigieren.

Es ist die Aufgabe der vorliegenden Erfindung, ein Verfahren zur Bestimmung der Ist-Position eines über ein Dreh-Schwenk-Gelenk an einem Koordinatenmeßgerät befestigten Tastkopfes anzugeben, das es erlaubt, die Lageveränderung des Tastkopfes infolge der Durchbiegung unter seinem Eigengewicht möglichst schnell und einfach, ohne zeitaufwendige Kalibriervorgänge für die benötigten Winkelstellungen zu korrigieren.

Diese Aufgabe wird gemäß den im Kennzeichen des Anspruches 1 angegebenen Maßnahmen dadurch gelöst, daß

- eine die Steifigkeit des Dreh-Schwenk-Gelenks bzw. des den Tastkopf mit ihm verbindenden Befestigungs- oder Verlängerungselementes beschreibende Größe bestimmt und gespeichert wird,
- aus den für den Meßvorgang eingestellten Winkelpositionen ($\alpha$, $\beta$) des Dreh-Schwenk-Gelenks und der die Steifigkeit beschreibende Größe ein die Durchbiegung des Dreh-Schwenk-Gelenks bzw. des Verlängerungselementes unter dem Einfluß der Schwerkraft beschreibender Korrekturwert berechnet wird, und

- die vom Koordinatenmeßgerät gelieferten Positionsmeßwerte (x, y, z) für den Tastkopf mit Hilfe des Korrekturwertes berichtigt werden.

Dieses Verfahren erlaubt es, das Dreh-Schwenk-Gelenk in einer sehr begrenzten Anzahl von Winkelstellungen - unter Umständen allein in einer einzigen Winkelstellung - zu kalibrieren und den Durchhang aufgrund des Eigengewichtes in allen übrigen Winkelstellungen, in denen gemessen wird, zu berechnen. Das Verfahren eignet sich deshalb besonders in Verbindung mit messenden Dreh-Schwenk-Gelenken, die in beliebige Winkelstellungen kontinuierlich einstellbar sind. Jedoch läßt sich auch in Verbindung mit schaltenden Dreh-Schwenk-Gelenken eine beträchtliche Verminderung der Gesamtmeßzeit erzielen, da die genannten aufwendigen Kalibrierprozesse für die in der Regel bis zu 720 verschiedenen diskreten Winkelstellungen des Dreh-Schwenk-Gelenks entfallen können.

Genaueste Ergebnisse erhält man dann, wenn das Biegungsverhalten der gesamten Anordnung bestehend aus Dreh-Schwenk-Gelenk, Verlängerungsstück und angesetztem Tastkopf berücksichtigt und dementsprechend die Größe berechnet oder bestimmt wird, die die Steifigkeit des gesamten Gebildes beschreibt, und anschließend bei der Koordinatenmessung zur Korrektur der Meßwerte herangezogen wird. In vielen Fällen, insbesondere wenn einzelne Komponenten wie der Tastkopf oder das Dreh-Schwenk-Gelenk selbst genügend steif sind, kann es ausreichen, allein das Biegeverhalten des Verlängerungsstückes in Betracht zu ziehen.

Die für die Steifigkeit charakteristische Größe kann auf unterschiedliche Art und Weise bestimmt werden. So ist es beispielsweise möglich, den Steifigkeitstensor aus den Materialdaten und den geometrischen Abmessungen von Tastkopfverlängerung und gegebenenfalls Dreh-Schwenk-Gelenk nach der Methode der Finiten Elemente zu errechnen. Weiterhin ist es möglich, die Größe mit Hilfe einer Prüfvorrichtung zu bestimmen, indem das Dreh-Schwenk-Gelenk mit angesetztem Tastkopf gezielt belastet wird und die resultierende Deformierung gemessen wird.

Die Größe läßt sich jedoch auch im Zuge eines Kalibrierverfahrens mit Hilfe des Koordinatenmeßgerätes selbst bestimmen. Hierzu ist es nur erforderlich, daß die Lage des Tastkopfes bzw. der Tastkugel in zwei unterschiedlichen Winkelstellungen, beispielsweise in vertikaler und in horizontaler Ausrichtung gemessen wird.

Für den Fall, daß häufig mit unterschiedlichen Tasterkonfigurationen am Dreh-Schwenk-Gelenk gemessen wird, ist es zweckmäßig, die für die Steifigkeit charakteristischen Größen für diese Konfigurationen zu bestimmen und im Speicher des Rechners des Koordinatenmeßgerätes abzulegen.

Nachfolgend wird die Erfindung anhand der Figuren 1 - 4 der Zeichnungen näher erläutert:

Fig. 1    ist eine vereinfachte Skizze, die ein Dreh-Schwenk-Gelenk mit angesetztem Tastkopf in einer ersten Winkelstellung zeigt;

Fig. 2    ist eine vereinfachte Skizze, die ein Dreh-Schwenk-Gelenk mit angesetztem Tastkopf in einer zweiten Winkelstellung zeigt;

Fig. 3    ist ein vereinfachtes Blockdiagramm der Meßsysteme eines zur Durchführung des erfindungsgemäßen Verfahrens geeigneten Koordinatenmeßgerätes mit einem messenden Dreh-Schwenk-Gelenk;

Fig. 4    ist ein vereinfachtes Blockdiagramm der Meßsysteme eines zur Durchführung des erfindungsgemäßen Verfahrens geeigneten Koordinatenmeßgerätes mit schaltendem Dreh-Schwenk-Gelenk.

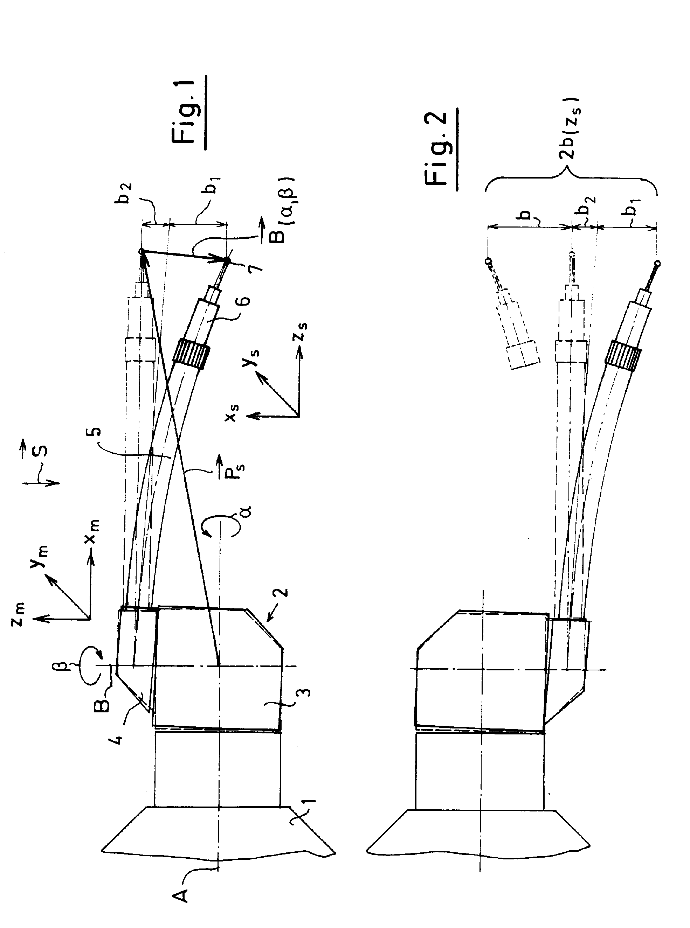

In Fig. 1 ist mit (1) die Aufnahme am Meßarm eines Koordinatenmeßgerätes bezeichnet, an die ein Dreh-Schwenk-Gelenk (2) angesetzt ist. Das Gelenk (2) besteht vereinfacht aus zwei um die beiden Achsen (A) und (B) um beliebige Winkelbeträge ($\alpha$) bzw. ($\beta$) verdrehbaren Teilen (3) und (4).

Das Dreh-Schwenk-Gelenk enthält in den beiden Achsen (A) und (B) Encoder zur kontinuierlichen Messung der eingestellten Winkellage. Bezüglich des konstruktiven Aufbaus des Gelenks (2) wird auf die bereits eingangs genannte DE-OS 37 40 070 verwiesen, auf die an dieser Stelle ausdrücklich Bezug genommen wird.

An das dreh- und schwenkbare Teil (4) des Dreh-Schwenk-Gelenks ist über ein Verlängerungsstück (5) der Tastkopf (6) des Koordinatenmeßgerätes angesetzt. Die Tastkugel (7) am Taststift dieses Tastkopfes (6) ist das eigentliche Antastelement, dessen Lage im Koordinatensytem der Meßeinrichtung hochgenau bekannt sein soll.

Aufgrund ihres Eigengewichts können sich nun sowohl die Teile (3) und (4) des Dreh-Schwenk-Gelenks bzw. deren Achslager als auch das Verlängerungsstück (5) und sogar der Tastkopf (6) bzw. der Taststift, wie in der Darstellung nach Fig. 1 übertrieben dargestellt, gegenüber der gestrichelt gezeichneten idealen gestreckten Ausrichtung deformieren. Der resultierende Durchhang (b) der Tastkugel setzt sich zusammen aus einem Anteil (b2), der das Resultat einer Verbiegung im Dreh-Schwenk-Gelenk (2) selbst ist, sowie aus einem Anteil (b1), der aus der Durchbiegung der Tasterverlängerung (5) resultiert. Wird dieser Durchhang (b) nicht bei der Messung berücksichtigt, so können abhängig von der Winkelstellung Fehler bis zum Betrage von 2b auftreten, abhängig von der winkelmäßigen Ausrichtung um die Drehachsen (A) und (B). Dies ist beispielhaft in Fig. 2 skizziert. Würde das Dreh-Schwenk-Gelenk in der in Fig. 1 gezeigten Stellung kalibriert und um den

Winkel $\alpha = 180°$ um die Achse A gedreht, dann weicht die tatsächliche Lage der Tastkugel in der durchgezogen gezeichneten Stellung um den Betrag 2b in Richtung der Schwerkraftachse $\bar{s}^{\,>}$ von der nach den Kalibrierdaten berechneten Stellung (kurzgestrichelt gezeichnet) ab. Bei entsprechend raumschräger Ausrichtung des Tastkopfes (6) ergeben sich andere, kleinere Werte für den Durchhang, da sich hierbei die effektive Hebellänge verkürzt.

Um ein Nachkalibrieren für die verschiedenen Winkelstellungen zu umgehen, wird nun so vorgegangen, daß in dem mathematischen Modell, das die Bewegung der Tastkugel (7) im Koordinatensystem des Koordinatenmeßgerätes beschreibt, die Durchbiegung aufgrund der Schwerkraft mitberücksichtigt wird. Das ursprüngliche mathematische Modell hat die Form

$$\bar{P}^{\,>} = \bar{X}^{\,>}_{M} + D(\alpha,\beta) * \bar{P}^{\,>}_{s} + \bar{V}^{\,>}(\alpha,\beta) \qquad (1).$$

Diese Form entspricht abgesehen von einer etwas abweichenden Benennung der Größen der Gleichung I in der genannten DE-OS 37 40 070, wobei

$\bar{X}^{\,>}_{M}$ : der drei-dimensionale Meßwert der Maßstäbe des Koordinatenmeßgerätes

$(\alpha,\beta)$ : der zwei-dimensionale (Winkel-)Meßwert des Dreh-Schwenk-Gelenks

$\bar{P}^{\,>}_{s}$ : die Tasterkoordinate in einem Koordinatensystem $(x_s, y_s, z_s)$, das dem Tastkopf zugeordnet ist, und

$D(\alpha,\beta)$ : die Matrix ist, die die Drehbewegung um die beiden Achsen des Dreh-Schwenk-Gelenks beschreibt.

$\bar{V}^{\,>}(\alpha,\beta)$ : ist ein Vektor, der eine translatorische Verlagerung des Tasterkoordinatensystems $(x_s, y_s, z_s)$ bei Drehung um die Achsen A und B beschreibt.

Der Vektor $\bar{P}^{\,>}$ repräsentiert den dreidimensionalen Meßpunkt d.h. die Lage des Mittelpunktes der Tastkugel (7) in dem Koordinatensystem des Koordinatenmeßgerätes. Dieser Meßpunkt $\bar{P}^{\,>}$ wird vom Rechner des Koordinatenmeßgerätes weiterverarbeitet.

Formal kann Gleichung (1) um einen Term $\bar{B}^{\,>}(\alpha,\beta)$ erweitert werden, der die Durchbiegung des Tasters mit der Tasterkoordinate $\bar{P}^{\,>}_{s}$ abhängig von der Winkelstellung $(\alpha,\beta)$ wiedergibt:

$$\bar{P}^{\,>} = \bar{X}^{\,>}_{M} + D(\alpha,\beta) * \bar{P}^{\,>}_{s} + \bar{V}^{\,>}(\alpha,\beta) + \bar{B}^{\,>}(\alpha,\beta) \qquad (2).$$

Hierbei wird wieder auf die Darstellung in Fig. 1 Bezug genommen.

Außer den bereits bekannten Größen $\bar{P}^{\,>}_{s}$ und $\bar{B}^{\,>}(\alpha,\beta)$ sind in Fig. 1 auch das Koordinatensystem $(x_M, y_M, z_M)$ des Koordinatenmeßgerätes, das Koordinatensystem $(x_s, y_s, z_s)$ des Tastkopfs und der Schwerkraftvektor $\bar{s}^{\,>}$ eingezeichnet. Sind der Biegetensor für den Tastkopf und seine Verlängerung für eine Winkelstellung $(\alpha,\beta)$ des Dreh-Schwenk-Gelenks und der Schwerkraftvektor $\bar{s}^{\,>}$ bekannt, so kann die Durchbiegung $\bar{B}^{\,>}(\alpha,\beta)$ für jede beliebige Winkelstellung berechnet werden. Schreibt man den Biegetensor als $T(\alpha,\beta)$, so ergibt sich für $\bar{B}^{\,>}(\alpha,\beta)$:

$$\bar{B}^{\,>}(\alpha,\beta) = T(\alpha,\beta) * \bar{s}^{\,>}$$

Der Tensor $T(\alpha,\beta)$ kann mit Hilfe der Transformationsmatrix $D(\alpha,\beta)$ für jede beliebige Winkelstellung einfach berechnet werden. Entsprechende Darstellungen finden sich beispielsweise in dem Lehrbuch "Tensorrechnung für Ingenieure" von J. Betten, Verlag Teubner, Stuttgart 1987.

Da die exakte Bestimmung von Biegetensor $T(\alpha,\beta)$ und Schwerkraftvektor $\bar{s}^{\,>}$ einen erheblichen Rechenaufwand erfordern, empfiehlt es sich folgende vereinfachende Annahmen zu machen, wenn die Biegekorrektur während der Koordinatenvermessung On - Line durchgeführt werden soll:

A. Der Schwerkraftvektor $\bar{s}^{\,>}$ zeigt im Koordinatensystem $(x_M, y_M, z_M)$ in Richtung $-z_M$.

B. Tastkopf und Verlängerung bilden eine Linie. Die Richtung dieses "geraden" Tastkopfs ist im Tastkopf-

koordinatensystem $(x_s, y_s, z_s)$ immer $z_s$.

C. Die $(x_s, y_s)$-Koordinaten von $\bar{P}^{>}{}_s$ sind ungleich Null, da der Koordinatenursprung des Systems $(x_s, y_s, z_s)$ in der Mitte des Dreh-Schwenk-Gelenks liegt. Die $z_s$-Komponente von $\bar{P}^{>}{}_s$ ist immer größer als Null und ist ein Maß für die "aktive" Biegelänge des Tastkopfs.

D. Für jede Biegelänge $z_s$ eines Tastkopfs (6) mit oder ohne Verlängerung (5) ist der Betrag der maximalen Durchbiegung $b(z_s)$, d.h. der maximalen Länge von $\bar{B}^{>}(\alpha,\beta)$ für alle $(\alpha,\beta)$ bekannt. Die maximale Durchbiegung wird angenommen, wenn der Schwerkraftvektor $\bar{S}^{>}$ wie in Fig.1 dargestellt senkrecht auf der Tasterrichtung $z_s$ steht. Die Länge von $z_s$ ist über die Tasterkoordinate $\bar{P}^{>}{}_s$ bekannt.

E. Der Betrag der Durchbiegung ist gleich dem Produkt aus $b(z_s)$ und dem Sinus des Winkels zwischen Schwerkraftvektor $\bar{S}^{>}$ und $z_s$.

Mit diesen Annahmen können konkrete Formeln zur Berechnung von $\bar{B}^{>}(\alpha,\beta)$ hergeleitet und auf dem Rechner des Koordinatenmeßgerätes programmiert werden. Außerdem läßt sich die maximale Durchbiegung $b(z_s)$ relativ einfach bestimmen.

Die vereinfachenden Annahmen A. bis E. sind für alle bisher bekannten Koordinatenmeßgeräte mit einem Dreh-Schwenk-Gelenk erfüllt. Sie ermöglichen die einfache Berechnung der Korrektur der Durchbiegung $\bar{B}^{>}(\alpha,\beta)$. Es werden nun folgende Abkürzungen benutzt:

$f(\alpha,\beta)$ = der Betrag der Durchbiegung für die Winkelstellung $(\alpha,\beta)$. Es gilt $f(\alpha,\beta)$ ist größer oder gleich Null.

$\bar{C}^{>}(\alpha,\beta)$ = der Richtungsvektor der Durchbiegung für die Winkelstellung $(\alpha,\beta)$. Die Länge von $\bar{C}^{>}(\alpha,\beta)$ ist gleich Eins.

$\bar{R}^{>}(\alpha,\beta)$ = der Richtungsvektor für den Taster in der Winkelstellung $(\alpha,\beta)$ in $(x_M, y_M, z_M)$-Koordinaten. Die Länge von $\bar{R}^{>}(\alpha,\beta)$ ist gleich Eins.

Damit ergeben sich folgende Formeln:

$$\bar{C}^{>}(\alpha,\beta) = \bar{R}^{>}(\alpha,\beta) \times \bar{S}^{>} \times \bar{R}^{>}(\alpha,\beta) / c$$

$$c = \| \bar{R}^{>}(\alpha,\beta) \times \bar{S}^{>} \times \bar{R}^{>}(\alpha,\beta) \|$$

$c$ ist die Länge des zweifachen Kreuzproduktes

$$\bar{R}^{>}(\alpha,\beta) \times \bar{S}^{>} \times \bar{R}^{>}(\alpha,\beta)$$

$f(\alpha,\beta) = b(z_s) * \text{sinus} (\text{Winkel zwischen } \bar{S}^{>} \text{ und } \bar{R}^{>}(\alpha,\beta))$

$$\bar{R}^{>}(\alpha,\beta) = D(\alpha,\beta) * \begin{pmatrix} 0 \\ 0 \\ 1 \end{pmatrix} .$$

Sind $(d_{ij})_{i,j = 1,2,3}$ die Komponenten der die Drehbewegung beschreibenden Matrix $D(\alpha,\beta)$ und benutzt man die Annahme A., kann das Kreuzprodukt und damit die Durchbiegung direkt aus den Komponenten der Drehmatrix $D(\alpha,\beta)$ ausgerechnet werden:

$$\vec{B}^{>}(\alpha,\beta) \;=\; b(z_s) \;*\; \begin{pmatrix} d_{13} \cdot d_{33} \\[2mm] d_{23} \cdot d_{33} \\[2mm] d_{33}^{2} - 1 \end{pmatrix} \qquad (3)$$

Da die Länge c gerade gleich der Länge $f(\alpha,\beta)$ ist, vereinfacht sich die Formel erheblich.

Die von dem Abstand $(z_s)$ der Tastkugel (7) vom Dreh-Schwenk-Gelenk (2) abhängige maximale Durchbiegung $b(z_s)$ läßt sich wie eingangs bereits erwähnt nach verschiedenen Methoden ermitteln.

Hier wird beispielsweise so vorgegangen, daß die Tasterkoordinate, d.h. der Mittelpunkt der Tastkugel (7) zuerst in der in Fig. 1 dargestellten Ausrichtung des Dreh-Schwenk-Gelenks kalibriert wird und danach ein Prüfkörper in dieser Ausrichtung im Meßraum des Koordinatenmeßgerätes vermessen wird. Danach wird der gleiche Prüfkörper noch einmal gemessen, wobei aber das Dreh-Schwenk-Gelenk in die in Fig. 2 dargestellte Ausrichtung gedreht ist. Beide Messungen geben unterschiedliche Werte, und der Abstand der Mittelpunkte des Prüfkörpers entspricht dem Wert 2b für diese Tasterkonfiguration der Länge $z_s$.

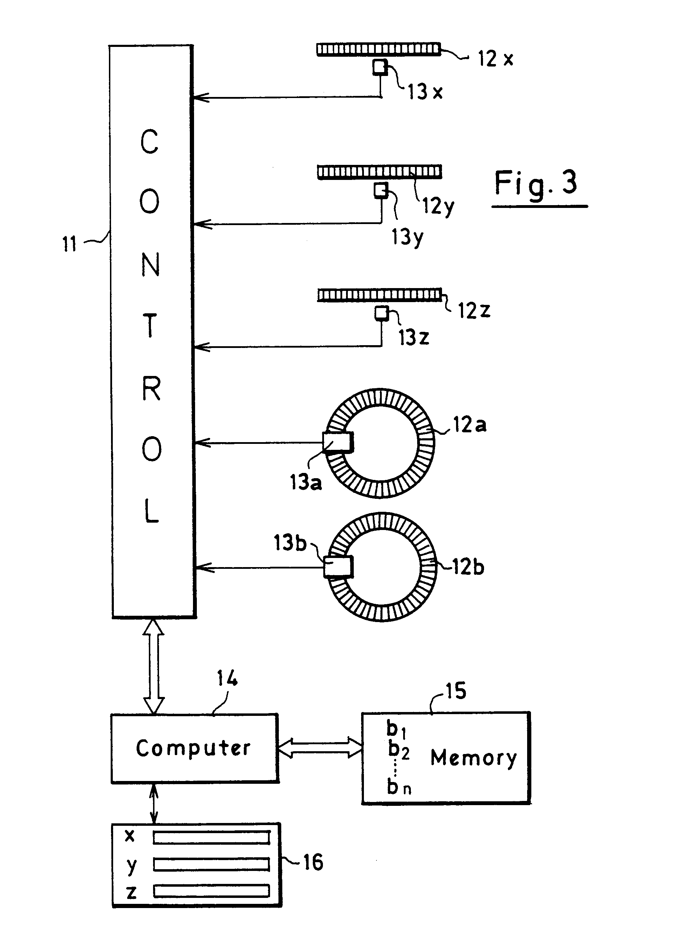

Man geht nun so vor, daß für die verschiedenen am Koordinatenmeßgerät verwendeten Tasterkonfigurationen unterschiedlicher Länge und Geometrie jeweils ihre Werte $b(z_s)$ bestimmt und in den Speicher des Rechners des Koordinatenmeßgerätes eingegeben werden. Der Rechner berichtigt dann die von den Meßsystemen des Koordinatenmeßgerätes gelieferten Meßwerte in jeder beliebigen Winkelstellung des Dreh-Schwenk-Gelenks, indem er die Durchbiegung $B(\alpha,\beta)$ gemäß Gleichung (3) aus den Winkeldaten der Encoder des Dreh-Schwenk-Gelenks berechnet und bei der Bildung des Positions-Meßwertes $\vec{P}^{>}$ in Gleichung (2) mitberücksichtigt. Das hierzu gehörende vereinfachte Blockschaltbild ist in Fig. 3 dargestellt. Darin sind mit (12x,y und z) die drei Maßstäbe des Koordinatenmeßgerätes bezeichnet und mit (13x,y und z) die entsprechenden Geber, deren Signale der Steuerung (11) des Koordinatenmeßgerätes zugeführt sind. Ebenfalls an die Steuerung (11) sind die Geber (13a und 13b) angeschlossen, die die Teilkreise (12a und 12b) der Winkelencoder im Dreh-Schwenk-Gelenk abtasten. Die Steuerung (11) übergibt die Meßwerte über einen Datenbus an den Rechner (14) des Koordinatenmeßgerätes, in dessen Speicher (15) neben zusätzlichen Korrekturwerten, die beispielsweise die Nicht-Linearität der Führungen des Koordinatenmeßgerätes betreffen, auch die Korrekturwerte $b_1$ bis $b_n$ für die maximale Durchbiegung der verschiedenen einzuwechselnden Tasterkombinationen enthalten sind.

Wenn das Koordinatenmeßgerät die Lage der Antastpunkte am zu vermessenden Objekt berechnet, wird der entsprechende Wert(b) aus dem Speicher eingelesen, entsprechend Gleichung (3) mit den Winkelwerten multipliziert, die die Ausrichtung des Tastkopfs (6) im Raum beschreiben, und anschließend die daraus berechnete Verlagerung der Tastkugel (7) aufgrund der Schwerkraft in z-Richtung bei der Berechnung der Antastkoordinate mitberücksichtigt. Das Ergebnis wird dann auf einer Ausgabeeinheit (16) dargestellt.

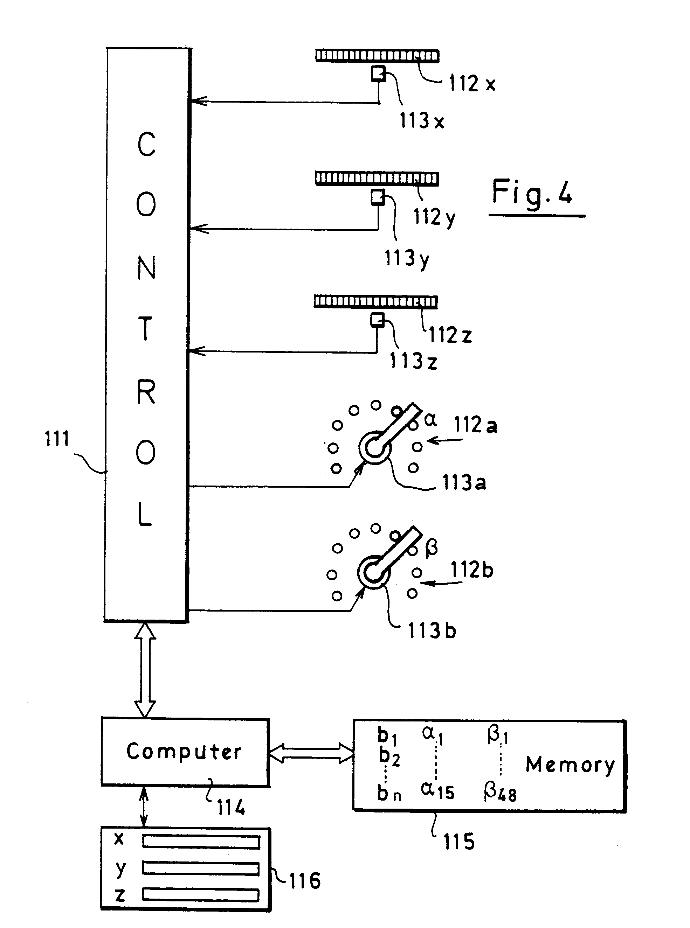

Im Ausführungsbeispiel nach Fig. 3 wurde von einem Koordinatenmeßgerät ausgegangen, das ein messendes Dreh-Schwenk-Gelenk besitzt. Das Verfahren läßt sich jedoch in gleicher Weise auch mit einem schaltenden Dreh-Schwenk-Gelenk realisieren. Hierzu wird auf das zweite Blockschaltbild in Fig. 4 Bezug genommen. Dort sind die Maßstäbe des Koordinatenmeßgerätes mit (112x,y und z) und die Geber der Längenmeßsysteme mit (113x,y und z) bezeichnet. Das schaltende Dreh-Schwenk-Gelenk besitzt für die beiden Drehachsen Rasten (112a und 112b), die bestimmte Winkelpositionen festlegen und auf die das Gelenk mit Hilfe von Antrieben (113a und 113b) eingestellt werden kann. Die entsprechenden Winkelwerte ($\alpha_1$ bis $\alpha_{15}$ und $\beta_1$ bis $\beta_{48}$), die zu den 15 verschiedenen Positionen des Drehwinkels $\alpha$ und zu den 48 verschiedenen Positionen des Schwenkwinkels $\beta$, also den insgesamt 720 verschiedenen Rastpositionen gehören, sind in diesem Falle in einem Eichprozeß vorab gewonnen worden und im Speicher (115) des Rechners (114) des Koordinatenmeßgerätes abgelegt. Ebenfalls in diesem Speicher (115) abgelegt sind wieder die Korrekturwerte $b_1$ bis $b_n$, die die maximale Durchbiegung für die verschiedenen Tasterkombinationen beschreiben.

Hier wird nun so vorgegangen, daß bereits vor jeder Antastung das Produkt der jeweiligen Winkelstellung mit dem Korrekturwert(b) für den bestimmten Taster gebildet wird und dann für die Berichtigung der im Zuge eines Antastvorganges gewonnenen Positionsmeßwerte zur Verfügung steht.

**Patentansprüche**

1. Verfahren zur Korrektur der Ist-Position eines über ein Dreh-Schwenk-Gelenk (2) an einem Koordinatenmeßgerät befestigten Tastkopfes (6), dadurch gekennzeichnet, daß

   - eine die Steifigkeit des Dreh-Schwenk-Gelenks (2) bzw. des den Tastkopfs (6) mit ihr verbindenden Verlängerungselementes (5) beschreibende Größe (b) bestimmt und in den Rechner (14) des Koordinatenmeßgerätes eingegeben wird,
   - aus den für den Meßvorgang eingestellten Winkelpositionen ($\alpha,\beta$) des Dreh-Schwenk-Gelenks und der die Steifigkeit beschreibende Größe(b) ein die aktuelle Durchbiegung des Dreh-Schwenk-Gelenks bzw. des Verlängerungselementes (5) unter dem Einfluß der Schwerkraft $\vec{S}$ beschreibender Korrekturwert $\vec{B}$ ($\alpha,\beta$) berechnet wird, und
   - die vom Koordinatenmeßgerät gelieferten Positionsmeßwerte $\vec{P}$ für den Tastkopf mit Hilfe des Korrekturwerts berichtigt werden.

2. Verfahren nach Anspruch 1, dadurch gekennzeichnet, daß die Größe (b) vorab rechnerisch bestimmt wird.

3. Verfahren nach Anspruch 1, dadurch gekennzeichnet, daß die Größe (b) im Zuge eines Kalibrierverfahrens mit Hilfe des Koordinatenmeßgerätes bestimmt wird.

4. Verfahren nach Anspruch 1, dadurch gekennzeichnet, daß die Größe (b) auf einer separaten Meßvorrichtung ermittelt wird.

5. Verfahren nach Anspruch 1, dadurch gekennzeichnet, daß die Größe (b) ein Tensor ist.

6. Verfahren nach Anspruch 1, dadurch gekennzeichnet, daß die Größen ($b_1 ... b_n$) für eine Vielzahl unterschiedlicher Tasterkonfigurationen bestimmt und im Speicher (15) des Rechners (14) des Koordinatenmeßgerätes abgelegt werden.

7. Koordinatenmeßgerät zur Durchführung des Verfahrens nach einem der Ansprüche 1 - 5 mit

   - Linearmaßstäben (12x, y, z) für die drei orthogonalen Raumrichtungen und diesen zugeordneten Positionsgebern (13x, y, z),
   - einem messenden Dreh-Schwenk-Gelenk (2) mit Encodern (12a/13a, 12b/13b), die Signale betreffend die Winkellage ($\alpha,\beta$) des Dreh-Schwenk-Gelenks abgeben,
   - mindestens einem an das Dreh-Schwenk-Gelenk (2) mittels eines Verlängerungsstückes (5) befestigten Tastkopf (6)
   - einem Rechner (14), der aus den Werten der Positionsgeber und der Encoder die Lage des Tastkopfes bzw. einer davon getragenen Tastkugel (7) im Raum berechnet,
   - einem Speicher (15), in dem Korrekturwerte abgelegt sind, dadurch gekennzeichnet, daß

   - die Korrekturwerte (b) die Steifigkeit des Dreh-Schwenk-Gelenks (2) bzw. des Verlängerungstückes (5) beschreiben und daß im Rechner (14) ein Korrekturprogramm vorgesehen ist, das aus den Korrekturwerten (b) und den Winkelwerten der Encoder die Durchbiegung des Dreh-Schwenk-Gelenks bzw. des Verlängerungsstückes unter dem Einfluß der Schwerkraft $\vec{S}$ berechnet und die Position des Tastkopfes (6) bzw. der Tastkugel (7) um die berechnete Durchbiegung $\vec{B}$ ($\alpha,\beta$) berichtigt.

8. Koordinatenmeßgerät zur Durchführung des Verfahrens nach einem der Ansprüche 1 - 5 mit

   - Linearmaßstäben (12x,y,z) für die drei orthogonalen Raumrichtungen und diesen zugeordneten Positionsgebern (13x,y,z),
   - einem schaltenden Dreh-Schwenk-Gelenk (2), das auf eine endliche Anzahl festgelegter Winkelwerte ($\alpha,\beta$) einstellbar ist,
   - mindestens einem an dem Dreh-Schwenk-Gelenk (2) mittels eines Verlängerungsstückes (5) befestigten Tastkopf (6)
   - einem Rechner (14), der aus den Werten der Positionsgeber und der Encoder die Lage des Tastkopfes bzw. einer davon getragenen Tastkugel im Raum berechnet,
   - einem Speicher (115), in dem die einstellbaren Winkelwerte des Dreh-Schwenk-Gelenks sowie Korrekturwerte abgelegt sind,
dadurch gekennzeichnet, daß
- die Korrekturwerte (b) die Steifigkeit des Dreh-Schwenk-Gelenks bzw. des Verlängerungstückes beschreiben und daß im Rechner (14) ein Korrekturprogramm vorgesehen ist, das aus den Korrekturwerten (b) und den gespeicherten Winkelwerten $(\alpha, \beta)$ die Durchbiegung des Dreh-Schwenk-Gelenks (2) bzw. des Verlängerungsstückes (5) unter dem Einfluß der Schwerkraft $\overline{S}^{>}$ berechnet und die Position des Tastkopfes (6) bzw. der Tastkugel (7) um die berechnete Durchbiegung $\overline{B}^{>}$ $(\alpha, \beta)$ berichtigt.

## Claims

1. A method of correcting the instantaneous position of a probe head (6) fastened via a articulating head (2) to a coordinate-measuring machine, characterized by the fact that
   - a variable (b) which describes the stiffness of the articulating head (2) and/or the extension element (5) connecting the probe head (6) to it is determined and entered into the computer (14) of the coordinate-measuring machine,
   - from the angle positions $(\alpha, \beta)$ of the articulating head set for the measurement process and the variable (b) describing the stiffness, a correction value $\overline{B}^{>}$ $(\alpha, \beta)$ describing the actual sag of the articulating head or of the extension element (5) under the influence of gravity $\overline{S}^{>}$ is calculated, and
   - the position measurement values $\overline{P}^{>}$ for the probe head supplied by the coordinate-measuring machine are corrected by means of the correction value.

2. A method according to Claim 1, characterized by the fact that the variable (b) is first of all determined mathematically.

3. A method according to Claim 1, characterized by the fact that the variable (b) is determined in the course of a calibration procedure with the aid of the coordinate-measuring machine.

4. A method according to Claim 1, characterized by the fact that the variable (b) is determined on a separate measuring device.

5. A method according to Claim 1, characterized by the fact that the variable (b) is a tensor.

6. A method according to Claim 1, characterized by the fact that the variables $(b_1 \ldots b_n)$ are determined for a plurality of different probe configurations and stored in the memory (15) of the computer (14) of the coordinate-measuring machine.

7. A coordinate-measuring machine for the carrying out of the method of any of Claims 1 to 5 having
   - linear scales (12x, y, x) for the three orthogonal directions in space and position encoders (13x, y, z) associated with them,
   - a measuring articulating head (2) with encoders (12a/13a, 12b/13b) which give off signals concerning the angular position $(\alpha, \beta)$ of the articulating head,
   - at least one probe head (6) fastened to the articulating head (2) by means of an extension piece (5),
   - a computer (14) which, from the values of the position encoders and of the angle encoders, calculates the position in space of the probe head and/or of a probe ball (7) borne thereby,
   - a memory (15) in which correction values are entered,
   characterized by the fact that
   - the correction values (b) describe the stiffness of the articulating head (2) and/or of the extension piece (5) and that within the computer (14) there is provided a correction program which, from the correction values (b) and the angle values of the encoders, calculates the sag of the articulating head and/or the extension piece under the influence of gravity $\overline{S}^{>}$ and corrects the position of the probe head (6) and/or the probe ball (7) by the calculated sag $\overline{B}^{>}$ $(\alpha, \beta)$.

8. A coordinate-measuring machine for the carrying out of the method according to any of Claims 1 to 5 having

- linear scales (12x, y, z) for the three orthogonal directions in space and position encoders (13x, y, z) associated with them,
- a switching articulating head (2) which is adjustable to a finite number of fixed angle values ($\alpha$, $\beta$),
- at least one probe head (6) fastened to the articulating head (2) by means of an extension piece (5),
- a computer (14) which determines the position in space of the probe head and/or of a probe ball borne by it from the values of the position encoders and the angle encoders,
- a memory (115) in which the settable angle values of the articulating head as well as correction values are entered,

characterized by the fact that

- the correction values (b) describe the stiffness of the articulating head and/or of the extension piece and that there is provided within the computer (14) a correction program which, from the correction values (b) and the stored angle values ($\alpha$, $\beta$), determines the sag of the articulating head (2) and/or of the extension piece (5) under the influence of gravity $\overline{S}$' and corrects the position of the probe head (6) and/or the probe ball (7) by the calculated sag $\overline{B}$' ($\alpha$, $\beta$).

## Revendications

1.  Procédé pour corriger la position réelle d'une tête de palpage (6) fixée par l'intermédiaire d'une articulation tournante et pivotante (2) à un appareil de mesure de coordonnées, caractérisé en ce que
    - une grandeur (b), qui représente la rigidité de l'articulation tournante et pivotante (2) ou de l'élément de prolongement (5) qui relie la tête de palpage (6) à l'articulation, est déterminée et est introduite dans le calculateur (14) de l'appareil de mesure de coordonnées,
    - une valeur de correction $\overrightarrow{B}$ ($\alpha$, $\beta$), qui représente la flexion actuelle de l'articulation tournante et pivotante ou l'élément de prolongement (5) sous l'influence de la force de pesanteur $\overrightarrow{S}$, est calculée à partir des positions angulaires ($\alpha$,$\beta$) réglées pour le processus de mesure, de l'articulation tournante et pivotante et à partir de la grandeur (b) décrivant la rigidité, et
    - les valeurs de mesure de position $\overrightarrow{P}$, qui sont délivrées par l'appareil de mesure de coordonnées, pour la tête de palpage sont prises en compte au moyen de la valeur de correction.

2.  Procédé selon la revendication 1, caractérisé en ce que la grandeur (b) est déterminée au préalable par calcul.

3.  Procédé selon la revendication 1, caractérisé en ce que la grandeur (b) est déterminée au cours d'un procédé de calibrage à l'aide de l'appareil de mesure de coordonnées.

4.  Procédé selon la revendication 1, caractérisé en ce que la grandeur (b) est déterminée à partir d'un dispositif de mesure séparé.

5.  Procédé selon la revendication 1, caractérisé en ce que la grandeur (b) est un tenseur.

6.  Procédé selon la revendication 1, caractérisé en ce que les grandeurs ($b_1...b_n$) sont mémorisées pour une multiplicité de configurations différentes de palpeurs et sont mémorisées dans la mémoire (15) du calculateur (14) de l'appareil de mesure de coordonnées

7.  Appareil de mesure de coordonnées pour la mise en oeuvre du procédé selon l'une des revendications 1-5, comprenant
    - des échelles de mesure linéaires (12x, y, z) pour les trois directions de l'espace orthogonales et des capteurs de position (13x, y, z) associés à ces échelles,
    - une articulation tournante et pivotante (2), qui exécute la mesure et comporte des codeurs (12a/13a, 12b/13b), qui délivrent des signaux concernant la position angulaire ($\alpha$, $\beta$) de l'articulation tournante et pivotante,
    - au moins une tête de palpage (6) fixée à l'articulation tournante et pivotante (2) au moyen d'un élément de prolongement (5),
    - un calculateur (14), qui, à partir des valeurs des capteurs de position et des codeurs, calcule la position dans l'espace de la tête de palpage ou d'une bille de palpage (7) séparée de cette tête,

9

- une mémoire (15), dans laquelle sont mémorisées des valeurs de correction,
caractérisé par le fait
- que les valeurs de correction (b) décrivent la rigidité de l'articulation tournante et pivotante (2) ou de l'élément de prolongement (5) et que dans le calculateur (14) il est prévu un programme de correction, qui, à partir des valeurs de correction (b) et des valeurs angulaires des codeurs, calcule la flexion de l'articulation tournante et pivotante ou de l'élément de prolongement, sous l'influence de la force de pesanteur $\vec{S}$ et corrige, de la flexion calculée $\vec{B}$ $(\alpha, \beta)$, la position de la tête de palpage (6) ou de la bille de palpage (7).

8. Appareil de mesure de coordonnées pour la mise en oeuvre du procédé suivant l'une des revendications 1-5, comportant
   - des échelles de mesure linéaires (12x, y, z) pour les trois directions de l'espace orthogonales et des capteurs de position (13x, y, z) associés à ces échelles,
   - une articulation tournante et pivotante (2) de commutation et peut être réglée sur un nombre final de valeurs angulaires fixées $(\alpha, \beta)$,
   - au moins une tête de palpage (6) fixée à l'articulation tournante et pivotante (2) au moyen d'un élément de prolongement (5),
   - un calculateur (14), qui, à partir des valeurs des capteurs de position et des codeurs, calcule la position dans l'espace de la tête de palpage ou d'une bille de palpage (7) séparée de cette tête,
   - une mémoire (115), dans laquelle sont mémorisées les valeurs angulaires réglables de l'articulation tournante et pivotante ainsi que des valeurs de correction,
   caractérisé en ce que
   - les valeurs de correction (b) décrivent la rigidité de l'articulation tournante et pivotante ou de l'élément de prolongement et que dans le calculateur (14) il est prévu un programme de correction qui, à partir des valeurs de correction (b) ou des valeurs angulaires mémorisées $(\alpha, \beta)$, calcule la flexion de l'articulation tournante et pivotante (2) ou de l'élément de prolongement (5) sous l'influence de la force de pesanteur $\vec{S}$ et corrige, de la flexion calculée $\vec{B}$ $(\alpha, \beta)$, la position de la tête de palpage (6) ou de la bille de palpage (7).

Fig. 1

Fig. 2

Fig. 3

Fig.4